# EUROPEAN PATENT APPLICATION

(11) **EP 2 613 519 A2**
(43) Date of publication of application: **10.07.2013**
(21) Application number: 13150264.3
(22) Date of filing: 04.01.2013
(51) Int. Cl.: H04N 5/232

(54) **Method and apparatus for storing camera-captured images**

(30) Priority: 06.01.2012 KR 20120001827
(71) Applicant: Samsung Electronics Co., Ltd, Gyeonggi-do 443-742 (KR)
(72) Inventor: Yang, Jeongmo, 443-742 Gyeonggi-do (KR)
(74) Representative: Harrison Goddard Foote LLP

(57) **Abstract**

A method and an apparatus are provided for storing camera-captured images. A preview image is displayed. An occurrence of a shutter event is checked for. A compressed image corresponding to the preview image is stored in a storage unit, when the shutter event has occurred.

## Description

### BACKGROUND OF THE INVENTION

### 1. Field of the Invention

The present invention relates generally to a method and an apparatus for storing camera-captured images and, more particularly, although not exclusively, to a method and an apparatus that can store a camera-captured image that is substantially identical to an image viewed by the user at the time a shutter is pressed, with minimal, and preferably zero, shutter lag.

### 2. Description of the Related Art

With technical advances, cameras and mobile terminals having a camera module have become more popular. A mobile terminal having a camera module may capture an image using the camera module, resize the captured image to fit a screen of the mobile terminal, and display the resized image as a preview image on the screen. In some case, preview images may be continuously displayed in the form of a video image. A user of the mobile terminal may manipulate or move the mobile terminal while viewing the preview image. When the user presses a shutter, for example after viewing a preview image, the mobile terminal may store a camera-captured image.

It is difficult for a mobile terminal having a camera to realize zero shutter lag for various reasons, which include, for example, hardware limitations. One reason that zero shutter lag is difficult to realize is the time that is required to change an operation mode of the camera module from a preview mode to a storage mode. For example, a user may wish to first view a preview image in the preview mode then store a captured image corresponding to a desired preview image in the storage mode, requiring an operation mode change between the preview mode and the storage mode. In the preview mode, a camera-captured image is resized and displayed as a preview image. In the storage mode, a camera-captured image is converted to a given format (e.g. a compressed format), such as, for example, Joint Photographic Experts Group (JPEG), and stored. Specifically, in the storage mode, when the user presses the shutter, the mobile terminal may not store a low-resolution preview image, but compresses a high-resolution image captured by the camera module and stores the compressed image. A preview image may be stored as well, and used as a thumbnail, or the like. Because of the time delay due to the mode change, the image that is actually stored may be different from the image that the user wishes to store (e.g. the desired preview image).

In a method for reducing shutter lag in a mobile terminal having a camera module, raw data may be processed into a preview image for display and may be processed into a compressed image for temporary storage in a buffer. When the shutter is pressed, the mobile terminal may extract a compressed image from the buffer and store the extracted image in a storage unit. In this method, preview mode operation and storage mode operation are simultaneously performed to reduce time lag. However, minimized or zero shutter lag is not sufficiently realized because the image stored in the storage unit may correspond to one of continuously displayed preview images, but may not correspond to the image that the user wishes to store.

The above description should not be construed as an acknowledgement or admission of any prior art with respect to the present invention. Rather, the above description is provided merely to indicate the background in which the present invention was conceived by the inventors.

### SUMMARY OF THE INVENTION

It is an aim of certain exemplary embodiments of the present invention to address, solve, mitigate or obviate, at least partly, at least one of the problems and/or disadvantages associated with the related art, including the above problems and/or disadvantages. Certain embodiments aim to provide at least one of the advantages described below. Accordingly, certain embodiments of the present invention provide a method and apparatus that can store a camera-captured image substantially identical to an image viewed by the user at the time the shutter is pressed. Specifically, certain embodiments of the present invention provide a method and apparatus that can ensure correspondence between the image viewed by the user at the time the shutter is pressed and the image stored in a storage unit.

According to one aspect of the present invention, a method for storing camera-captured images is provided. A preview image is displayed. An occurrence of a shutter event is checked for. A compressed image corresponding to the preview image is stored in a storage unit, when the shutter event has occurred.

According to another aspect of the present invention, an apparatus is provided for storing camera-captured images. The apparatus includes: a display unit for displaying a preview image; a storage unit for storing a compressed image; and an input unit for generating a shutter event. The apparatus also includes: a control unit for controlling the display unit to display the preview image, for checking for an occurrence of the shutter event, and for controlling the storage unit to store the compressed image, whereby the compressed image corresponds to the preview image.

Another aspect of the present invention provides a computer program comprising instructions arranged, when executed, to implement a method and/or apparatus, in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description when taken in conjunction with the accompanying drawings, in which:
FIG. 1 is a block diagram illustrating a mobile terminal, according to an embodiment of the present invention;
FIG. 2 is a diagram illustrating a configuration of a control unit in the mobile terminal of FIG. 1, according to an embodiment of the present invention;
FIG. 3 is a diagram illustrating another configuration of a control unit in the mobile terminal of FIG. 1, according to an embodiment of the present invention;
FIG. 4 is a diagram illustrating another configuration of a control unit in the mobile terminal of FIG. 1, according to an embodiment of the present invention;
FIG. 5 is a flowchart illustrating an image storage method, according to an embodiment of the present invention;
FIG. 6 is a flowchart illustrating an image storage method, according to another embodiment of the present invention;
FIG. 7 is a flowchart illustrating an image storage method, according to another embodiment of the present invention;
FIG. 8 illustrates formats for interleaved data composed of preview image data and compressed image data, according to an embodiment of the present invention; and
FIG. 9 is a diagram illustrating a software architecture for supporting the image storage method, according to an embodiment of the present invention.

### DETAILED DESCRIPTION OF EMBODIMENTS OF THE PRESENT INVENTION

Exemplary embodiments of the present invention are described in detail with reference to the accompanying drawings. This description is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The same or similar components may be designated by the same or similar reference numerals although they may be illustrated in different drawings. In the drawings, some elements may be exaggerated or only outlined in brief, and thus may not be drawn to scale. The present invention is not limited by relative sizes of objects and intervals between objects indicated in the drawings.

Particular terms, expressions and words may be defined to describe the invention in the best manner. Accordingly, the meaning of specific terms, expressions or words used in the specification and the claims should not be limited to the bibliographic, literal or commonly employed sense. Rather, the terms, expression and words used herein are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

Detailed descriptions of structures, constructions, functions or processes known in the art may be omitted for clarity and conciseness, and to avoid obscuring the subject matter of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise, and where the indefinite article is used, the specification is to be understood as contemplating plurality as well as singularity, unless the context requires otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

As referred to herein, "raw data" refers to data that is produced by a camera and corresponds to an unprocessed digital image.

A "preview image" refers to an image that is obtained by resizing an image corresponding to raw data to fit a screen (e.g. of a camera or other apparatus including a camera module) such that the preview image may be displayed on the screen. A preview image may be a low-resolution version of high-resolution raw data. The camera module may have a function for processing raw data into a preview image. Preview images may be stored and used as thumbnails, and the like.

A "compressed image" refers to an image that is obtained by compressing an image corresponding to raw data in a format, such as, for example, JPEG, for storage. The camera module may have a function for processing raw data into a compressed image.

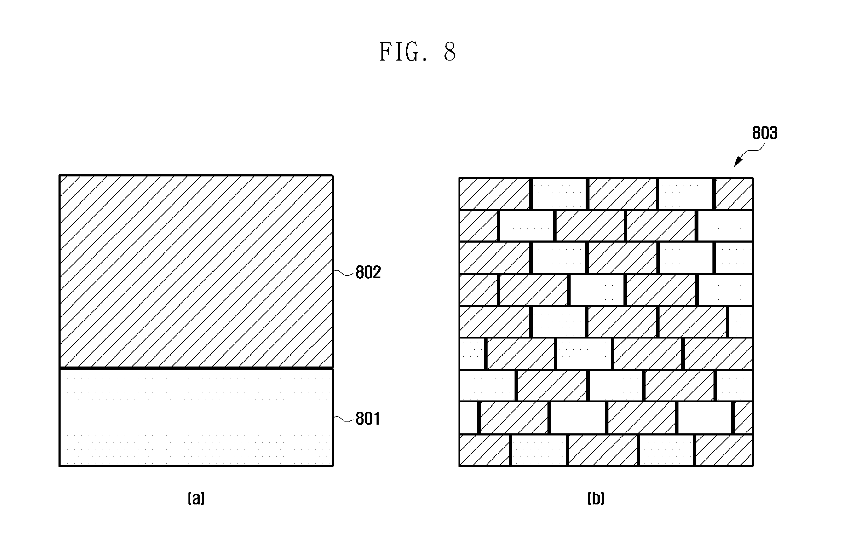

"Interleaved data" refers to data that is obtained by combining preview image data and compressed image data. For example, when image data is processed in units of packets (or blocks or sub-blocks), interleaved data may be composed of preview image packets (or blocks or sub-blocks) and compressed image packets (or blocks or sub-blocks), for example arranged at random or in a non-random order. The packets, blocks or sub-blocks may be of varying size or the same size. It should be understood that the expression "interleaved data", as used herein, may refer to any suitable way to combine two sets of data (whether maintained in contiguous form, or divided into packets, blocks or sub-blocks), and in particular, is not limited to an arrangement of two sets of data in multiple sets of alternate packets blocks or sub-blocks. Figures 8a and 8b illustrate two exemplary formats for interleaved data. The skilled person will appreciate that other formats are possible.

The image storage method and apparatus of certain exemplary embodiments of the present invention may be applied to mobile terminals including, for example, a cellular phone, a smartphone, a tablet computer, a handheld computer, a Portable Multimedia Player (PMP), and a Personal Digital Assistant (PDA).

The image storage method and apparatus of certain embodiments of the present invention aim to minimize shutter lag, and preferably realize zero shutter lag.

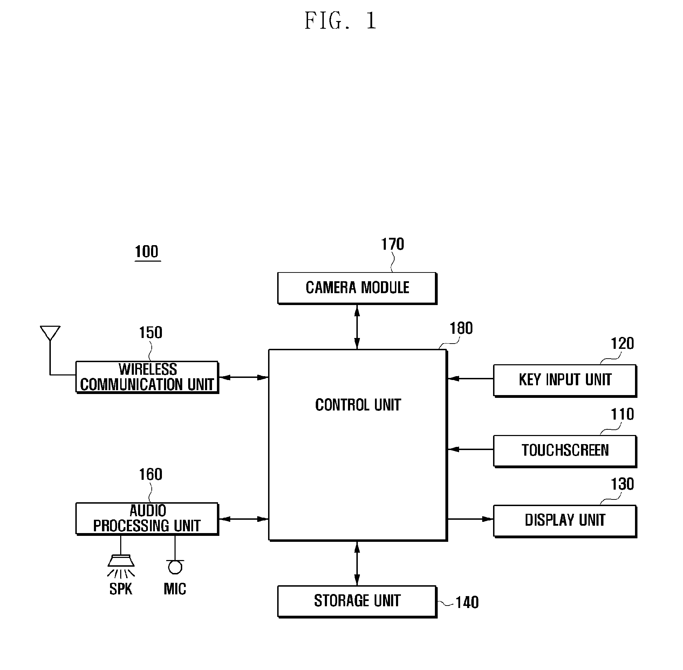

FIG. 1 is a block diagram illustrating a mobile terminal 100, according to an embodiment of the present invention. Referring to FIG. 1, the mobile terminal 100 includes a touchscreen 110, a key input unit 120, a display unit 130, a storage unit 140, a wireless communication unit 150, an audio processing unit 160 including a speaker SPK and a microphone MIC, a camera module 170, and a control unit 180.

The touchscreen 110, disposed on the display unit 130, generates a touch event corresponding to a touch gesture made by the user on the touchscreen 110. The touchscreen 110 sends the touch event (e.g. signals representing the touch event) to the control unit 180. The control unit 180 may control other components based on a touch event sent by the touchscreen 110. For example, the control unit 180 may store a compressed image in the storage unit 140 in response to a shutter press event. Touch gestures may include a touch, a tap, a long tap, a drag, and a sweep. A touch corresponds to single point contact with the screen. A tap corresponds to a touch and a release at the same point. A long tap corresponds to long touch (e.g. a touch having a duration exceeding a certain threshold) and release at the same point. A drag corresponds to a touch and a movement while the touch is maintained. The movement may be in one direction or a variety of different directions. A sweep or a flick corresponds to touch, fast movement (e.g. a movement having a speed exceeding a certain threshold) and release. The touchscreen 110 may be realized using any suitable type of technology, for example a resistive type, a capacitive type, an electromagnetic induction type, or a pressure type technology.

The key input unit 120 may include a plurality of alphanumeric and function keys for inputting alphanumeric information and for setting various functions. The function keys may include direction, side, and shortcut keys associated with corresponding functions. The key input unit 120 transmits key signals in response to the user actuating one or more of the keys, for setting and controlling the mobile terminal 100, to the control unit 180. Key signals may be related, for example, to power on/off, volume adjustment, screen on/off, and shutter pressing. The control unit 180 may control the components according to the key signals.

In this exemplary embodiment, the display unit 130 displays images using analog signals. The display unit 130 converts digital data from the control unit 180 into analog data and displays the analog data under the control of the control unit 180. In particular, the display unit 130 converts preview image data from the control unit 180 into an analog signal and displays the analog signal. In other embodiments, the display unit 130 may display images using digital signals, in which case, digital-to-analog conversion may not be required.

The display unit 130 may output a menu for controlling the camera module 170 together with the preview image. This menu includes a shutter key. The control unit 180 may control the camera module 170 according to a touch event detected on the menu. In other embodiments, the shutter key may be implemented as a physical key, for example a function key. In general, any virtual, or touch-based, key may be implemented as a corresponding physical key according to design considerations.

The display unit 130 may be realized using any suitable type of technology, for example a flat display panel composed of Liquid Crystal Display (LCD) devices, Organic Light Emitting Diodes (OLED), or Active Matrix Organic Light Emitting Diodes (AMOLED).

The storage unit 140 may store an Operating System (OS) of the mobile terminal 100, various applications, and various data, such as, for example, text, audio and video. The storage unit 140 may include a program section and a data section. The program section may store a boot program, an operating system, middleware, and various applications. The middleware arbitrates data between the operating system and an application, or between different applications. In particular, the program section may store an application for minimizing shutter lag, and preferably realizing zero shutter lag, which may include a routine for processing raw data into a preview image, a routine for processing raw data into a compressed image, a routine for extracting preview image data from interleaved data, a routine for extracting compressed image data from interleaved data, a routine for detecting a shutter event, a routine for storing a compressed image corresponding to a preview image on the display unit 130 in the storage unit 140, and a routine for controlling buffer reading and writing.

The program section may store preinstalled applications and third party applications. Preinstalled applications, for example, a browser, an email client, and an instant messaging client may be installed in the mobile terminal 100 by default. Third party applications are various applications that may be downloaded from online markets (e.g. an online store available through a network, for example the Internet). A third party application may be freely installed in, or uninstalled from, the mobile terminal 100. When the mobile terminal 100 is turned on, a boot program is loaded in the main memory (Random Access Memory (RAM)). The boot program loads the operating system and middleware in the main memory. The operating system loads an application to be executed upon request.

The data section of the storage unit 140 may store data generated in the course of using the mobile terminal 100, and data downloaded from outside of the mobile terminal 100. The data section may store preview images, compressed images and various setting values for terminal operation. The data section may also temporarily store clipboard data (e.g. copied data).

The wireless communication unit 150 may perform operations for voice calls, video calls, data calls and digital broadcast reception under the control of the control unit 180. The wireless communication unit 150 may include a mobile communication module (based on 3^{rd} Generation (3G), 3.5 Generation (3.5G) or 4^{th} Generation (4G) mobile communication), a local area communication module (such as a Wireless-Fidelity (Wi-Fi) module), and a digital broadcast receiving module (such as a Digital Multimedia Broadcasting (DMB) module).

The audio processing unit 160 may convert a digital audio signal from the control unit 180 into an analog audio signal, and may output the analog audio signal to the speaker SPK. The audio processing unit 160 may also convert an analog audio signal, such as, for example, a voice signal, from the microphone MIC into a digital audio signal, and may send the digital audio signal to the control unit 180.

The camera module 170 captures an image of a target object and outputs the image data to the control unit 180. The camera module 170 may include a lens for forming an image, an image sensor for converting an optical signal corresponding to the image into an electrical signal, and an Image Signal Processor (ISP) for converting the analog electrical signal from the image sensor into digital data and outputting the digital data as raw data to the control unit 180. The image signal processor may include an element for processing raw data into a preview image, an element for processing raw data into a compressed image, and an element for combining preview image data and compressed image data into interleaved data. Data or image data produced by the image signal processor is output to the control unit 180.

The control unit 180 may control the overall operation of the mobile terminal 100, control signal exchange between internal components thereof, and perform data processing. The control unit 180 may control supply of power from a battery to the internal components. The control unit 180 may execute various applications stored in the program section of the storage unit 140. In particular, the control unit 180 receives image data from the camera module 170, temporarily stores the image data in a buffer, and controls the display unit 130 to display the image data temporarily stored in the buffer. The control unit 180 determines whether a shutter event occurs after image display. The control unit 180, when the shutter event occurs after image display, transfers the image data in the buffer to the storage unit 140.

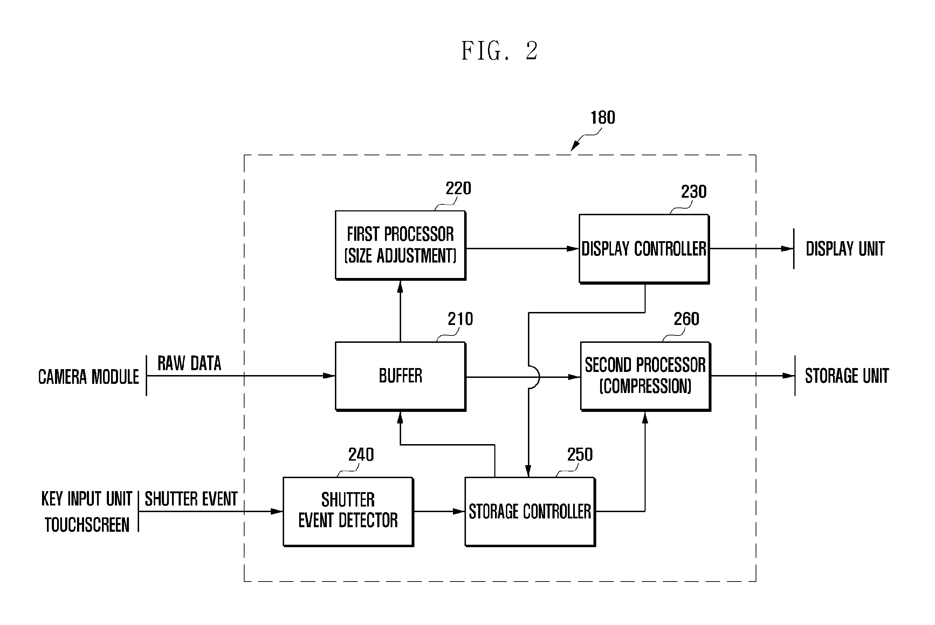

FIG. 2 is a diagram illustrating a configuration of the control unit 180, according to an exemplary embodiment of the present invention. Referring to FIG. 2, the control unit 180 includes a buffer 210, a first processor 220, a display controller 230, a shutter event detector 240, a storage controller 250, and a second processor 260. Raw data from the camera module 170 is temporarily stored in the buffer 210. Raw data stored in the buffer 210 is sent to the first processor 220. The first processor 220 resizes the raw data into a preview image that fits in the screen, and sends the preview image to the display controller 230. After receiving a preview image from the first processor 220, the display controller 230 controls the display unit 130 to display the received preview image. Thereafter, the display controller 230 notifies the storage controller 250 of a display completion event indicating the completion of the display of the preview image. The shutter event detector 240 is connected to the touchscreen 110 and the key input unit 120. When a shutter event is detected, the shutter event detector 240 notifies the storage controller 250 of the occurrence of the shutter event. When a display completion event is detected, the storage controller 250 checks whether a shutter event notification is received from the shutter event detector 240. When a shutter event notification is not received, the storage controller 250 controls the buffer 210 to empty data, so that new raw data may be temporarily stored in the buffer 210. Hence, the buffer 210 may store new raw data from the camera module 170. When a shutter event notification is received, the storage controller 250 controls the second processor 260 to process the raw data in the buffer 210 into a compressed image, and to store the compressed image in the storage unit 140. Specifically, under the control of the storage controller 250, the second processor 260 processes the raw data in the buffer 210 into a compressed image, and outputs the compressed image to the storage unit 140. The storage controller 250 empties the buffer 210, so that new raw data may be temporarily stored in the buffer 210. In some embodiments, the control unit 180 may include a plurality of buffers to store raw data from the camera module 170. When a plurality of buffers are utilized, identifiers may be assigned to the buffers and/or pieces of raw data stored in the buffers to distinguish between the buffers and/or data. The storage controller 250 and the display controller 230 may share such identifiers. Specifically, the display controller 230 may send a preview image identifier together with a preview image notification to the storage controller 250. The storage controller 250 may control the multiple buffers and the second processor 260 on the basis of these identifiers.

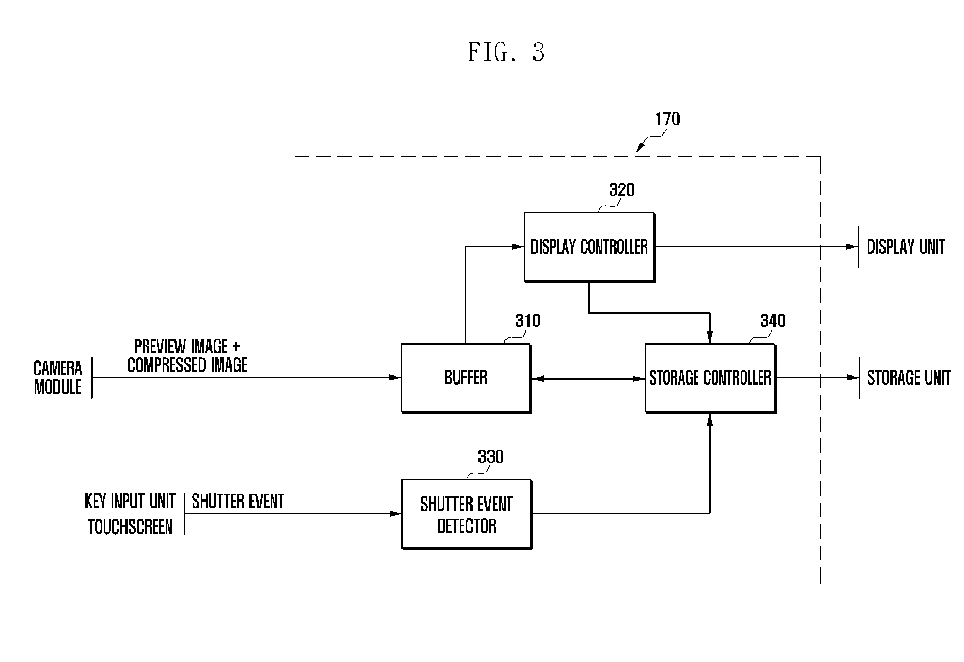

FIG. 3 is a diagram illustrating another configuration of the control unit 180, according to an embodiment of the present invention. Referring to FIG. 3, the control unit 180 includes a buffer 310, a display controller 320, a shutter event detector 330, and a storage controller 340. A preview image and a compressed image from the camera module 170 are temporarily stored in the buffer 310. The preview image in the buffer 310 is sent to the display controller 320. After receiving a preview image, the display controller 320 controls the display unit 130 to display the received preview image. Thereafter, the display controller 320 notifies the storage controller 340 of a display completion event indicating the completion of the display of the preview image. The shutter event detector 330 is connected to the touchscreen 110 and key input unit 120. When a shutter event is detected, the shutter event detector 330 notifies the storage controller 340 of the occurrence of the shutter event. When the display completion event is detected, the storage controller 340 checks whether a shutter event notification is received from the shutter event detector 330. When a shutter event notification is not received, the storage controller 340 controls the buffer 310 to empty data, so that a new preview image and compressed image may be temporarily stored in the buffer 310. When a shutter event notification is received, the storage controller 340 extracts the compressed image from the buffer 310 and stores the compressed image in the storage unit 140. The storage controller 340 controls the buffer 310 to empty data, so that a new preview image and compressed image may be temporarily stored in the buffer 310.

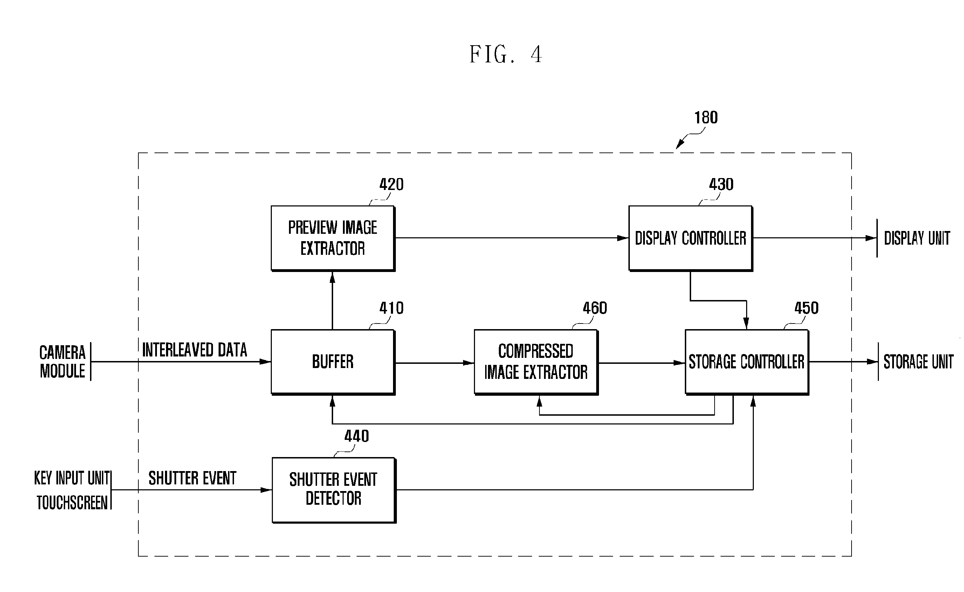

FIG. 4 illustrates another configuration of the control unit 180, according to an embodiment of the present invention. Referring to FIG. 4, the control unit 180 includes a buffer 410, a preview image extractor 420, a display controller 430, a shutter event detector 440, and a storage controller 450, and a compressed image extractor 460. Interleaved data from the camera module 170 is temporarily stored in the buffer 410. The interleaved data stored in the buffer 410 is sent to the preview image extractor 420. The preview image extractor 420 extracts preview image data from the received interleaved data, and sends the preview image data to the display controller 430. After receiving preview image data, the display controller 430 controls the display unit 130 to display the received preview image data. Thereafter, the display controller 430 notifies the storage controller 450 of a display completion event indicating the completion of the display of the preview image. The shutter event detector 440 is connected to the touchscreen 110 and the key input unit 120. When a shutter event is detected, the shutter event detector 440 notifies the storage controller 450 of the occurrence of the shutter event. When the display completion event is detected, the storage controller 450 checks whether a shutter event notification is received from the shutter event detector 440. When a shutter event notification is not received, the storage controller 450 controls the buffer 410 to empty data, so that new interleaved data may be temporarily stored in the buffer 410. When a shutter event notification is received, the storage controller 450 controls the compressed image extractor 460 to extract compressed image data from the interleaved data in the buffer 410, and store the compressed image data in the storage unit 140. The storage controller 450 empties the buffer 410, so that new interleaved data may be temporarily stored in the buffer 410.

As described above, embodiments of the present invention can ensure that the preview image viewed by the user at the time of pressing the shutter is substantially the same as the stored compressed image.

It should be apparent to those skilled in the art that the mobile terminal 100 may further include units comparable or equivalent to the above-described units (such as a Global Positioning System (GPS) module), and that one unit thereof may be removed or replaced with another unit, for example based on design considerations. In addition or as an alternative to the touchscreen 110 and the key input unit 120, one or more of a touch pad, a track ball, and a keyboard may also be used as input means.

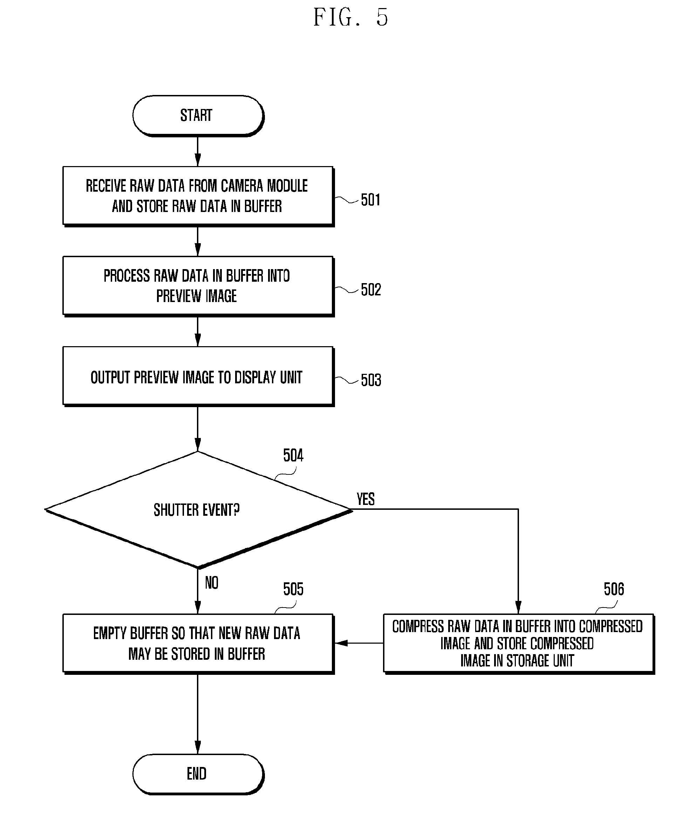

FIGS. 5 to 7 are flowcharts illustrating exemplary embodiments of an image storage method performed by the control unit 180. FIG. 8 illustrates formats for interleaved data composed of preview image data and compressed image data, according to an embodiment of the present invention.

FIG. 5 is a flowchart illustrating an image storage method, according to an exemplary embodiment of the present invention. Referring to FIG. 5, the control unit 180 receives raw data from the camera module 170, and temporarily stores the raw data in a buffer, in step 501. Only one buffer is used for raw data in this exemplary embodiment of the present invention, although more than one buffer may be used in other embodiments. The control unit 180 extracts raw data from the buffer in an order of storage, and processes the raw data into a preview image, in step 502. The control unit 180 outputs the preview image to the display unit 130, in step 503. After displaying the preview image, the control unit 180 checks occurrence of a shutter event, in step 504. When a shutter event is not detected, the control unit 180 empties the buffer corresponding to the currently displayed preview image, so that new raw data may be stored in the buffer, in step 505. When a shutter event is detected, the control unit 180 processes the raw data in the corresponding buffer into a compressed image, and stores the compressed image in the storage unit 140, in step 506. The control unit 180 then empties the corresponding buffer, so that new raw data may be stored in the buffer, in step 505.

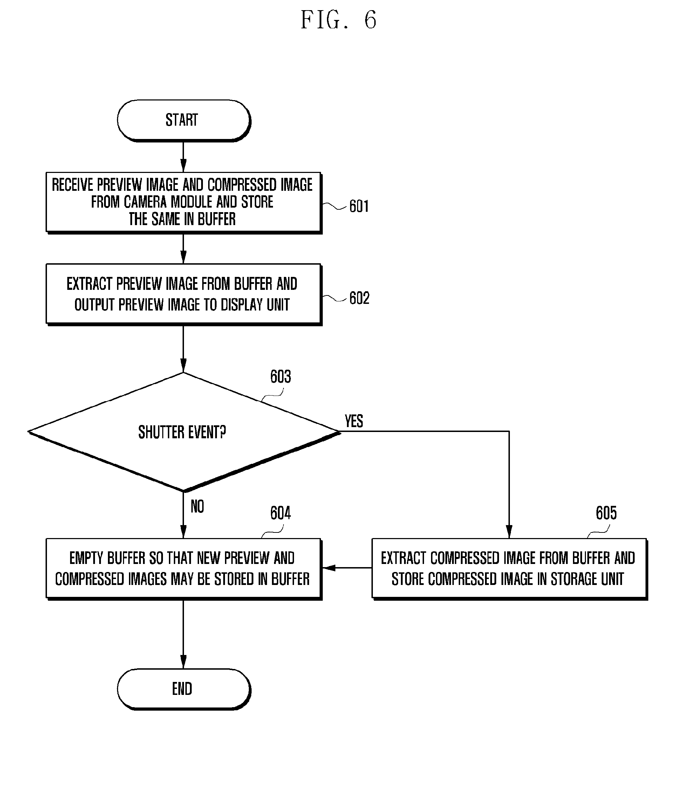

FIG. 6 is a flowchart illustrating an image storage method, according to another exemplary embodiment of the present invention. Referring to FIG. 6, the control unit 180 receives a preview image 801 and a compressed image 802, as shown in (a) of FIG. 8, from the camera module 170, and temporarily stores the same in the buffer, in step 601. The control unit 180 extracts the preview image 801 from the buffer, and outputs the preview image 801 to the display unit 130, in step 602. After displaying the preview image, the control unit 180 checks occurrence of a shutter event, in step 603. When a shutter event is not detected, the control unit 180 empties the buffer, so that new preview and compressed images may be stored in the buffer, in step 604. When a shutter event is detected, the control unit 180 extracts the compressed image 802 and stores the compressed image 802 in the storage unit 140, in step 605. The control unit 180 then empties the buffer, so that new preview and compressed images may be stored in the buffer, in step 604.

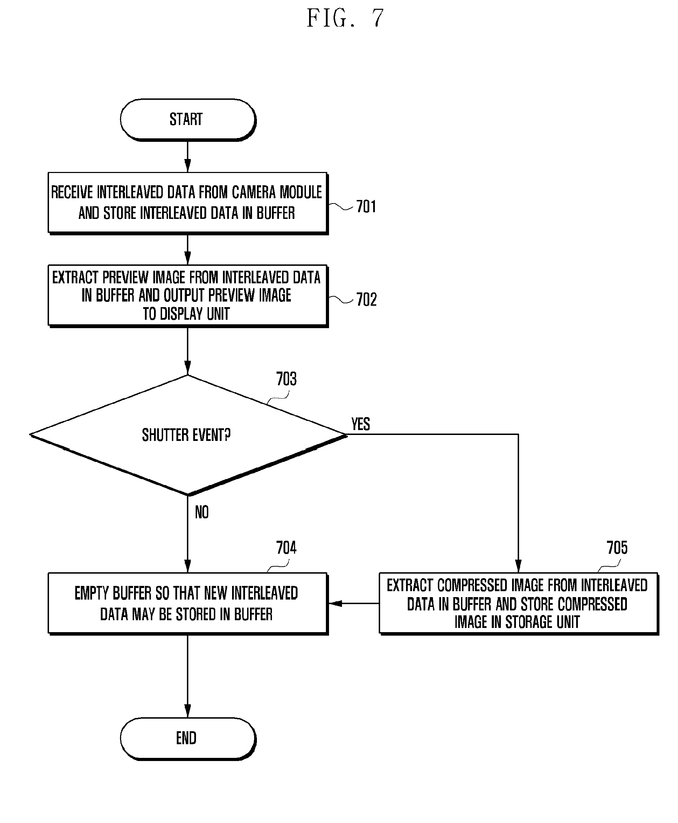

FIG. 7 is a flowchart illustrating an image storage method, according to another exemplary embodiment of the present invention. Referring to FIG. 7, the control unit 180 receives interleaved data 803, as shown in (b) of FIG. 8, from the camera module 170, and temporarily stores the same in the buffer, in step 701. The control unit 180 extracts a preview image from the interleaved data 803 in the buffer, and outputs the preview image to the display unit 130, in step 702. After displaying the preview image, the control unit 180 checks for occurrence of a shutter event, in step 703. When a shutter event is not detected, the control unit 180 empties the buffer, so that new interleaved data may be stored in the buffer, in step 704. When a shutter event is detected, the control unit 180 extracts a compressed image from the interleaved data 803 in the buffer and stores the compressed image in the storage unit 140, in step 705. The control unit 180 then empties the buffer, so that new interleaved data may be stored in the buffer, in step 704.

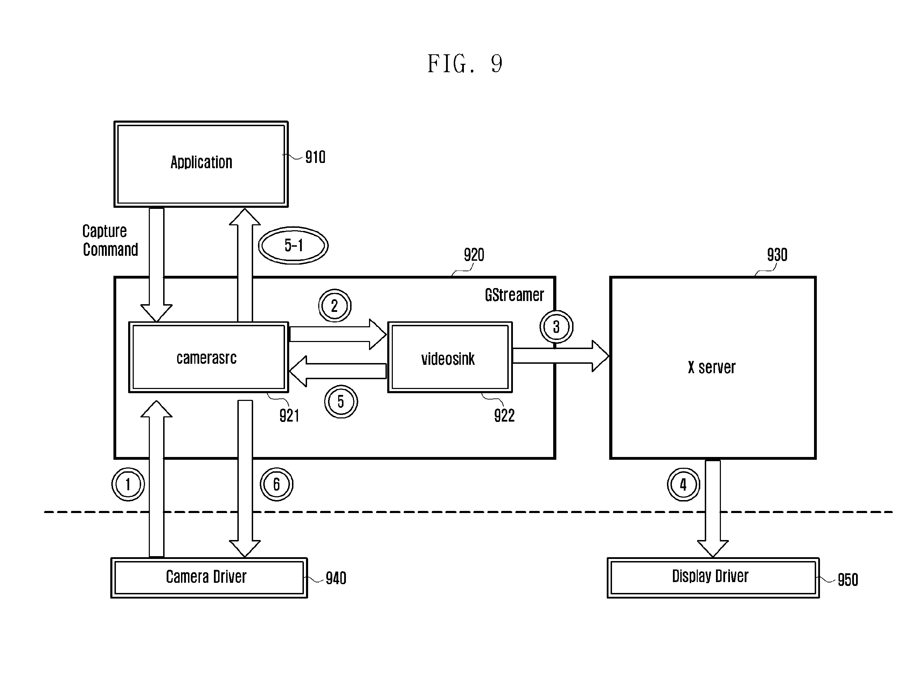

FIG. 9 is a diagram illustrating a software architecture for supporting the image storage method, according to an embodiment of the present invention.

Referring to FIG. 9, the control unit 180 executes a camera application 910, GStreamer 920, Xserver 930, a camera driver 940, and a display driver 950. GStreamer 920 and Xserver 930 are Linux-based middleware. At step 1, a camerasrc 921 (a plug-in) of the GStreamer 920 receives interleaved data from the camera driver 940 of the kernel. At step 2, the camerasrc 921 extracts a preview image (for example, YUV data) from the interleaved data and sends the preview image to a videosink 922 (a plug-in). At step 3, the videosink 922 sends the preview image to the Xserver 930. At step 4, the Xserver 930 forwards the preview image to the display driver 950. The Xserver 930 may process the preview image (for example, YUV-to-RGB transform and resizing) before forwarding. The display driver 950 renders the preview image on the display unit 130.

At step 5, after sending the preview image to the Xserver 930, the videosink 922 sends a notification of "preview image output" to the camerasrc 921. The camerasrc 921 checks whether a shutter event corresponding to a capture command is received from the camera application 910. At step 5-1, when a capture command is received, the camerasrc 921 extracts a compressed image (for example, JPEG data) from the interleaved data and sends the compressed image to the camera application 910. The camera application 910 stores the compressed image in the storage unit 140. At step 6, after sending the compressed image to the camera application 910, the camerasrc 921 sends a buffer release command to the camera driver 940. In response to the buffer release command, the camera driver 940 empties the buffer, so that new interleaved data may be stored in the buffer. When a capture command is not received, step 5-1 is skipped and only step 6 is performed.

As described above, the image storage method of the embodiments of the present invention can ensure that the preview image viewed by the user at the time of pressing the shutter is the same as the stored compressed image.

It will be appreciated that embodiments of the present invention can be realized in the form of hardware, software or a combination of hardware and software. For example, the image storage method of certain embodiments of the present invention may be implemented as software in the form of computer programs. Any such software may be stored in various volatile and/or non-volatile computer readable storage media. The computer readable storage media may store program instructions, data files, data structures and combinations thereof. The program instructions may include instructions developed specifically for embodiments of the present invention and possibly existing general-purpose instructions. The computer readable storage media may include magnetic media such as, for example, a hard disk and a floppy disk, optical media such as, for example, a Compact Disc-Read Only Memory (CD-ROM) and a Digital Versatile Disc (DVD), magneto-optical media such as, for example, a floptical disk, and memory devices such as, for example, a ROM and RAM. The program instructions may include machine codes produced by compilers and high-level language codes executable through interpreters. Each hardware device may be replaced with one or more software modules to perform operations according to the embodiments of the present invention, and vice versa.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present invention has been shown and described with reference to certain embodiments thereof, it will be understood by those skilled in the art that various changes in form and detail may be made therein without departing from the spirit and scope of the present invention as defined by the appended claims.

## Claims

1. A method for storing camera-captured images, the method comprising the steps of:
displaying a preview image;
checking for an occurrence of a shutter event; and
storing a compressed image corresponding to the preview image in a storage unit, when the shutter event has occurred.

2. The method of claim 1, wherein checking for the occurrence of the shutter event is performed after the preview image is displayed.

3. The method of claim 2, wherein displaying the preview image comprises:
receiving raw data from a camera module and storing the raw data in a buffer;
processing the raw data from the buffer into the preview image; and
outputting the preview image to a display unit.

4. The method of claim 3, wherein storing the compressed image comprises:
processing the raw data from the buffer into a compressed image, when the shutter event has occurred;
outputting the compressed image to the storage unit; and
emptying the buffer so that the buffer is able to store new raw data.

5. The method of claim 4, wherein storing the compressed image further comprises emptying the buffer so that the buffer is able to store the new raw data, when the shutter event has not occurred.

6. The method of any of claims 2 to 5, wherein displaying the preview image comprises:
receiving the preview image and the compressed image from a camera module, and storing the preview image and the compressed image in a buffer; and
extracting the preview image from the buffer, and outputting the preview image to a display unit.

7. The method of claim 6, wherein storing the compressed image comprises:
extracting the compressed image and outputting the compressed image to the storage unit, when the shutter event has occurred; and
emptying the buffer so that the buffer is able to store a new preview image and a new compressed image.

8. The method of any of claims 2 to 7, wherein displaying the preview image comprises:
receiving interleaved data composed of the preview image and the compressed image from a camera module, and storing the interleaved data in a buffer;
extracting the preview image from the interleaved data in the buffer; and
outputting the preview image to a display unit;

9. The method of claim 8, wherein storing the compressed image comprises:
extracting the compressed image from the interleaved data in the buffer and outputting the compressed image to the storage unit, when the shutter event has occurred; and
emptying the buffer so that the buffer is able to store new interleaved data.

10. An apparatus for storing camera-captured images, the apparatus comprising:
a display unit for displaying a preview image;
a storage unit for storing a compressed image;
an input unit for generating a shutter event; and
a control unit for controlling the display unit to display the preview image, for checking for an occurrence of the shutter event, and for controlling the storage unit to store the compressed image, which corresponds to the preview image.

11. The apparatus of claim 10, wherein the control unit is configured for checking for the occurrence of the shutter event after the preview image is displayed on the display unit.

12. The apparatus of claim 11, wherein the control unit comprises:
a buffer for storing raw data received from a camera module;
a first processor for processing the raw data from the buffer into the preview image;
a display controller for receiving the preview image from the first processor, and for controlling the display unit to display the preview image;
a shutter event detector, connected to the input unit, for detecting the shutter event;
a storage controller for checking whether a shutter event notification is received from the shutter event detector after a display completion notification is received from the display controller, for controlling an operation to process the raw data in the buffer into the compressed image when the shutter event notification is received, and for emptying the buffer so that the buffer is able to store new raw data; and
a second processor for processing the raw data from the buffer into the compressed image under control of the storage controller.

13. The apparatus of claim 12, wherein the storage controller is configured for emptying the buffer so that the buffer is able to store new raw data, when the shutter event notification is not received.

14. The apparatus of claim 11, 12 or 13, wherein the control unit comprises:
a buffer for storing the preview image and the compressed image from a camera module;
a display controller for extracting the preview image from the buffer, and for controlling the display unit to display the preview image;
a shutter event detector, connected to the input unit, for detecting the shutter event;
a storage controller for checking whether a shutter event notification is received from the shutter event detector after a display completion notification is received from the display controller, for extracting the compressed image from the buffer and outputting the compressed image to the storage unit when the shutter event notification is received, and for emptying the buffer so that the buffer is able to store a new preview image and a new compressed image.

15. The apparatus of any of claims 11 to 14, wherein the control unit comprises:
a buffer for storing interleaved data from a camera module;
a preview image extractor for extracting the preview image from the interleaved data in the buffer;
a display controller for receiving the preview image from the preview image extractor, and for controlling the display unit to display the preview image;
a shutter event detector, connected to the input unit, for detecting a shutter event;
a storage controller for checking whether a shutter event notification is received from the shutter event detector after a display completion notification is received from the display controller, for controlling an operation to extract the compressed image from the interleaved data in the buffer when the shutter event notification is received, and for emptying the buffer so that the buffer is able to store new interleaved data; and
a compressed image extractor for extracting the compressed image from the interleaved data in the buffer.

16. The apparatus of any of claims 11 to 15, further comprising a camera module comprising: a lens for forming an image; an image sensor for converting an optical signal corresponding to the image into an electrical signal; and an image signal processor for converting the electrical signal from the image sensor into raw data.

17. The apparatus of claim 16, wherein the image signal processor comprises:
a first component for processing the raw data into the preview image, and for outputting the preview image to a buffer of the control unit; and
a second component for processing the raw data into the compressed image, and for outputting the compressed image to the buffer.

18. The apparatus of claim 17, wherein the image signal processor further comprises a third component for combining the preview image and the compressed image into interleaved data, and for outputting the interleaved data to the buffer of the control unit.
